Europäisches Patentamt

European Patent Office

Office européen des brevets

(19)

(11) Publication number: **0 079 620**
**A2**

(12) **EUROPEAN PATENT APPLICATION**

(21) Application number: **82110628.3**

(22) Date of filing: **16.11.82**

(51) Int. Cl.³: **B 32 B 15/01**
**C 23 F 17/00**

(30) Priority: **17.11.81 JP 184644/81**

(43) Date of publication of application:
**25.05.83 Bulletin 83/21**

(84) Designated Contracting States:
**DE FR GB**

(71) Applicant: **NISSHIN STEEL CO., LTD.**
**4-1 Marunouchi 3-chome**
**Chiyoda-ku Tokyo(JP)**

(72) Inventor: **Kusanagi, Yoshihiro**
**13-22 Imakitaikegami-cho Amagasaki**
**Hyogo-ken(JP)**

(72) Inventor: **Tsuchida, Jiro**
**6-43 Shinyasumatsu 3-chome Izumisano**
**Osaka-fu(JP)**

(74) Representative: **Groening, Hans Wilhelm, Dipl.-Ing.**
**Siebertstrasse 4 Postfach 860 340**
**D-8000 München 86(DE)**

(54) **Aluminum-coated steel sheets for enameling.**

(57) An aluminum-coated steel sheet for enameling which has been rolled and recrystallized. This aluminum-coated steel sheet enables the formation of an excellent enamel coating free from blister defect and having good adhesion to the substrate.

*Fig. I*

(a)

EP 0 079 620 A2

**0079620**

<u>Title of the Invention</u>

Aluminum-coated steel sheets for enameling

<u>Technical Field of the Invention</u>

This invention relates to aluminum-coated steel sheets for enameling on which excellent enamel coatings can be obtained.

<u>Background of the Invention</u>

Steel sheets the surface of which is coated with aluminum, hot-dip aluminum-coated steel sheets for instance, have excellent heat resistance, corrosion resistance, etc., and are widely used for automobile exhaust gas treatment apparatuses, parts of driers and stoves which are exposed to high temperature, roofing, interior finish, etc.

Recently, production of aluminum-coated steel sheets the surface of which is enameled or porcelainized has been developed on an industrial scale. Enamel-coating is effected by applying an enamel glaze on the surface of the substrate and firing it. The firing temperature is usually 530 - 600°C, although it varies depending upon the kind of glaze used. The enamel glazes for ordinary steel sheets are fired at 800°C or a higher temperature.

When a substrate of an aluminum-coated steel sheet is, whether as is or after being formed into the shape of the finished product by bending or press work, enameled, there is a problem that a lot of minute blisters and craters occurs (referred to as "blister defect" hereinafter) on the surface of the formed enamel layer, which deteriorate corrosion resistance and appearance of the products.

We have endeavored to solve this problem and found that the blister defect is caused by microscopic pinholes, nonplated portions and minute cracks generated when the plated

2

0079620

sheets are worked for shaping, etc., which exist in the plated aluminum layer. That is, a plated aluminum layer as plated is of the cast structure so to speak, and therefore it is inevitably accompanied by incidental minute pinholes and non-plated portions, and is poor in ductility and elongation, easily developing cracking when worked. These defects are rather slight and harmless for the heat resistance and corrosion resistance uses. However, when the sheet is enameled, these defects become initiation points of the above mentioned blister defect. Therefore, if these defects in the plated aluminum layer are eliminated, the blister defect is also eliminated.

This invention is based on this finding, and provides aluminum-coated steel sheets for enameling, the aluminum layer of which is of the rolled-and-recrystallized structure.

Disclosure of the Invention

According to the invention of this application, there is provided an aluminum-coated steel sheet for enameling comprising a base steel sheet which contains 0.004 - 0.02 % by weight of nitrogen and an aluminum coating layer having a rolled-and-recrystallized structure.

That is to say, the substrate sheet for enameling in accordance with this invention has a coated aluminum layer which has been rolled and annealed for recrystallization, and thus is free from pinholes and is provided with good ductility. Therefore, generation of cracks in the coated aluminum layer when the sheet is worked for shaping is prevented, and thus development of the blister defect in the stage of enameling is substantially prevented.

The aluminum-coated steel sheet for enameling according to the invention of this application is produced for instance by aluminum-plating a base steel sheet by the conventional process, rolling the sheet and annealing the rolled sheet for recrystallization.

2

As the base sheet, ordinary low carbon steel (usually about 0.2 % by weight of C or less) sheet is preferably used from the viewpoint of formability. If a steel sheet containing not less than 0.004 % of the nitrogen (N) is used, the temperature of formation of the Al-Fe intermetallic compound (simply referred to as "alloy" hereinafter) in the interface between the base steel sheet and the plated aluminum layer is raised, and therefore the firing temperature in enameling can be raised, and thus adhesion of the enamel layer is improved. These effects are enhanced with the increase in the N content, but are accompanied by hardening and deterioration in workability of the steel sheet. So the N content is selected in consideration of the shape of the finished product, and if hard working is required, the N content should preferably be not more than 0.02 % by weight.

Hot-dip aluminum plating of base steel sheets can be carried out by the conventional process. In the course of hot-dip aluminum plating, the Al-Fe alloy is usually formed at the interface between the base steel sheet and the plated layer. If the alloy, which is hard and brittle, is produced in a large amount, it will cause cracking when the plated sheet is rolled. In order to prevent this, it is effective to use an Al-Si plating bath containing not less than 1.0 % by weight of silicon (Si) instead of a neat Al bath. By the use of this bath, the thickness of the alloy layer formed during plating can be restrained to about 2 - 5 μm or less, and thus occurrence of cracking during rolling can be avoided. However, if the bath contains too much Si, hard and brittle plate-like crystals of Si appear spread throughout the plated layer and cause cracking during rolling. The Si content should preferably be not more than 15 % by weight.

After a required thickness of aluminum layer has been formed, the plated sheet is subjected to rolling. Either of cold rolling or warm rolling will do. About 10 % reduction is required in order to fill up pinholes and unplated portions of the cast structure of the plated layer, although the degree of reduction can be suitably selected in consideration of the thickness of the starting sheet and that of the finished sheet. Especially, if a sheet is rolled down by more than 20 %, the alloy layer formed during plating is finely divided, and thus scale-off and cracking of the plated layer caused by the alloy layer in the course of shaping prior to enameling is prevented. At the same time, the recrystallization starting temperature of the base steel sheet per se is lowered, and therefore recrystallization annealing can be carried out at a lower temperature when higher workability is desired in the base steel sheet per se. The lower the recrystallization annealing temperature is the more restrained the growth of the alloy layer is. Thus, needless to say, the quality of the enamel layer, especially adhesion thereof to the substrate is much improved. However, too high reduction again causes cracking in the plated aluminum layer, which induces the blister defect in the finished enamel. So the reduction is preferably limited to 70 %.

The rolled aluminum-plated steel sheet is now subjected to recrystallization annealing, since the plated aluminum layer is of a work-hardened rolled structure and is poor in ductility. Annealing is preferably carried out at about 250 - 400°C. By this annealing the plated aluminum layer is provided with good ductility and the filled-in pinholes etc. are completely eliminated by recrystallization.

The structure of the plated aluminum layer of the thus obtained aluminum-plated steel sheet is similar to the forged structure rather than the initial cast structure. The plated layer is entirely free from pinholes and has good mechanical properties, especially ductility. So this material can be used as the substrate for enameling as is or after shaping as desired, and gives enameled products free from the blister defect.

One of the enamel characteristics is adhesion to the substrate. This depends upon the temperature of firing for enamel

4

formation and alloy formation in the plated layer. Enamel forming firing is carried out at high temperatures as mentioned above, and generally more excellent enamel characteristics such as chemical resistance, hardness, luster, etc. are obtained at higher temperatures. But at an excessively high temperature, alloying is promoted at the interface between the base steel sheet and the plated aluminum by mutual diffusion, and the entire plated layer turns into a brittle alloy during a prolonged firing. In this case the adhesion of the formed enamel layer is poor and the enamel easily scales off. This means that firing must be carried out at a temperature under the alloy formation temperature. Therefore, selection of glazes to be used is restricted, and the characteristics of the resulting enamels are also limited.

A solution to the above problem is to use a base steel sheet containing 0.004 % by weight or more nitrogen. The temperature at which the alloy is formed at the interface between the base steel and the plated aluminum by mutual diffusion depends upon the N content of the base steel sheet. When the N content is not less than 0.04 % by weight, the alloy formation temperature is about 550°C or higher. This means that if the N content of the base steel sheet meets this condition, enamel formation can be carried out at such a high temperature without formation of brittle alloy. High N content prevents alloy formation in the course of hot-dip plating, too, and therefore it is effective for prevention of cracking during rolling and thus for prevention of the blister defect. These effects are enhanced as the N content is increased, but are accompanied by the hardening of the steel sheet per se. So in the case where hard working is required, it is desirable to limit the N content to about 0.02 % by weight or less. The alloy formation temperature is influenced by carbon (C) content, too, as explained below more in detail. The lower (especially not more than about 0.02 % by weight) the C content, the higher the alloy formation temperature. Therefore, the N content is determined in relation with the C content in consideration of the desired enamel characteristics. Thus,

5

in accordance with this invention, the restriction in selection of glazes and firing temperature is eased, whereby enamels of good quality can be obtained using desired glazes and employing higher temperatures. The enamel obtained are, of course, free from the blister defect, since the plated aluminum layer has a forged structure as the result of the rolling and recrystallization annealing.

In the manufacturing of enamel products, the workability of the unenameled hot-dip aluminum-plated steel sheet substrate sometimes comes into question. When the hot-dip aluminum-plated steel sheet is rolled with about 20 % or higher reduction in order to finely divide the alloyed layer or to obtain a desired finished thickness relative to the initial thickness, the base steel sheet itself becomes of rolled structure and is work-hardened. Such a hardened steel sheet cannot regain workability by the annealing at the temperature (about 250 - 400°C) intended for recrystallization of the aluminum layer. Such steel sheets present no problem as long as they are used as are or after slight working, but when they are subjected to hard working such as drawing so as to be formed into desired shapes, their workability is too poor. In such a case, the sheet may be annealed at the recrystillization temperature of the base steel sheet, preferably at a temperature higher than about 500°C. And if base steel sheets containing not less than 0.004 % N are used, the desired recrystallization can be achieved without accompanying alloy formation, and therefore, they do not present difficulties in the enameling process that follows. Needless to say, recrystallization of the plated aluminum layer is also achieved during the above mentioned annealing. Thus it will be understood that the annealing temperature must not exceed about 600°C, in order to avoid melting of the plated aluminum layer.

Brief Description of the Attached Drawings

Now the invention is specifically described with reference to the attached drawings, wherein :

6

Fig. 1 shows the shape of the test piece for the bending test of substrate sheets for enameling; and

Fig. 2 shows the shape of the test piece for the deep drawing test of substrate sheets for enameling.

## Specific Description of the Invention

A substrate sheet for enameling was obtained by hot-dip-plating a 0.8 mm thick cold rolled low carbon plain steel sheet (C: 0.005 - 0.19 % by weight, N: 0.001 - 0.028 % by weight) by the conventional hot-dip aluminum plating process after being degreased and cleaned in a conventional reduction atmosphere heating furnace. The Al bath contained 9 % of silicon, the bath temperature was 670°C, and the dipping period was 5 seconds.

The above aluminum-plated sheet was cold-rolled at a reduction of 10 - 80 %, and was annealed for recrystallization at 480 - 570°C for 10 hours.

A commercially available enamel glaze for aluminum-plated steel sheets was made into a suitable slip and was applied by spraying on the surface of a aluminum-plated steel sheet obtained in the above to the thickness of 80 μm. The coated sheet was fired at 550°C for 7 minutes.

The recrystallization conditions of the above substrate sheet and the plated aluminum layer, alloy formation in the plated aluminum layer, and properties (adhesion and blister defect) of the obtained enamel product are summarized in Table 1.

(A)   State of recrystallization and alloy formation.

The effect of recrystallization annealing was judged on the basis of hardness by the Vickers hardness tester, and configurations of the ferrite phase by microscopic observation.

Table 1

| Sample No. | Steel Composition (wt%) | | Rolling Reduction (%) | Annealing Temperature and Properties of Substrate Sheets and Enameled Products | | | | | | | |
|---|---|---|---|---|---|---|---|---|---|---|---|
| | | | | 480°C | | 500°C | | 530°C | | 570°C | |
| | C | N | | Substrate Sheet | Enamel Product | Substrate Sheet | Enamel Product | Substrate Sheet | Enamel Product | Substrate Sheet | Enamel Product |
| 1 | 0.005 | 0.0024 | 10 | × | × | × | × | △ | × | △ | × |
| 2 | | | 20 | × | × | × | × | △ | × | △ | × |
| 3 | | | 40 | × | × | × | × | △ | × | △ | · |
| 4 | | | 60 | × | × | × | × | △ | × | △ | × |
| 5 | | | 80 | × | × | × | × | △ | × | △ | × |
| 6 | 0.004 | 0.0043 | 10 | □ | ○ | □ | ○ | ○ | ○ | ○ | ○ |
| 7 | | | 20 | □ | ○ | □ | ○ | ○ | ○ | ○ | ○ |
| 8 | | | 40 | □ | ○ | ○ | ○ | ○ | ○ | ○ | ○ |
| 9 | | | 60 | □ | ○ | ○ | ○ | ○ | ○ | ○ | ○ |
| 10 | | | 80 | □ | □ | ○ | □ | ○ | □ | ○ | □ |
| 11 | 0.005 | 0.0105 | 10 | □ | ○ | □ | ○ | ○ | ○ | ○ | ○ |
| 12 | | | 20 | □ | ○ | ○ | ○ | ○ | ○ | ○ | ○ |
| 13 | | | 40 | □ | ○ | ○ | ○ | ○ | ○ | ○ | ○ |
| 14 | | | 60 | □ | ○ | ○ | ○ | ○ | ○ | ○ | ○ |
| 15 | | | 80 | □ | □ | ○ | □ | ○ | | ○ | □ |
| 16 | 0.005 | 0.0161 | 10 | □ | ○ | □ | ○ | ○ | ○ | ○ | ○ |
| 17 | | | 20 | □ | ○ | ○ | ○ | ○ | ○ | ○ | ○ |
| 18 | | | 40 | □ | ○ | ○ | ○ | ○ | ○ | ○ | ○ |
| 19 | | | 60 | □ | ○ | ○ | ○ | ○ | ○ | ○ | ○ |
| 20 | | | 80 | □ | □ | ○ | □ | ○ | □ | ○ | □ |

## Table 1 (Cont'd)

| Sample No. | Steel Composition (wt%) | | Rolling Reduction (%) | Annealing Temperature and Properties of Substrate Sheets and Enameled Products | | | | | | | |
| --- | --- | --- | --- | --- | --- | --- | --- | --- | --- | --- | --- |
| | | | | 480°C | | 500°C | | 530°C | | 570°C | |
| | C | N | | Substrate Sheet | Enamel Product | Substrate Sheet | Enamel Product | Substrate Sheet | Enamel Product | Substrate Sheet | Enamel Product |
| 21 | 0.022 | 0.0029 | 10 | × | × | × | × | △ | × | △ | × |
| 22 | | | 20 | × | × | △ | × | △ | × | △ | × |
| 23 | | | 40 | × | × | △ | × | △ | × | △ | × |
| 24 | | | 60 | × | × | △ | × | △ | × | △ | × |
| 25 | | | 80 | × | × | △ | × | △ | × | △ | × |
| 26 | 0.019 | 0.0061 | 10 | □ | ○ | □ | ○ | ○ | ○ | ○ | ○ |
| 27 | | | 20 | □ | ○ | ○ | ○ | ○ | ○ | ○ | ○ |
| 28 | | | 40 | □ | ○ | ○ | ○ | ○ | ○ | ○ | ○ |
| 29 | | | 60 | □ | ○ | ○ | ○ | ○ | ○ | ○ | ○ |
| 30 | | | 80 | □ | ○ | □ | ○ | ○ | □ | ○ | □ |
| 31 | 0.021 | 0.0148 | 10 | □ | ○ | ○ | ○ | ○ | ○ | ○ | ○ |
| 32 | | | 20 | □ | ○ | ○ | ○ | ○ | ○ | ○ | ○ |
| 33 | | | 40 | □ | ○ | ○ | ○ | ○ | ○ | ○ | ○ |
| 34 | | | 60 | □ | ○ | ○ | ○ | ○ | ○ | ○ | ○ |
| 35 | | | 80 | □ | □ | ○ | □ | ○ | □ | ○ | □ |
| 36 | 0.048 | 0.0031 | 10 | × | × | △ | × | △ | × | △ | × |
| 37 | | | 20 | × | × | △ | × | △ | × | △ | × |
| 38 | | | 40 | × | × | △ | × | △ | × | △ | × |
| 39 | | | 60 | × | × | △ | × | △ | × | △ | × |
| 40 | | | 80 | × | × | △ | × | △ | × | △ | × |

9

0079620

Table 1 (Cont'd)

| Sample No. | Steel Composition (wt%) | | Rolling Reduction (%) | Annealing Temperature and Properties of Substrate Sheets and Enameled Products | | | | | | | |
|---|---|---|---|---|---|---|---|---|---|---|---|
| | | | | 480°C | | 500°C | | 530°C | | 570°C | |
| | C | N | | Substrate Sheet | Enamel Product | Substrate Sheet | Enamel Product | Substrate Sheet | Enamel Product | Substrate Sheet | Enamel Product |
| 41 | | | 10 | □ | ○ | ○ | ○ | ○ | ○ | △ | △ |
| 42 | | | 20 | □ | ○ | ○ | ○ | ○ | ○ | △ | △ |
| 43 | 0.044 | 0.0059 | 40 | □ | ○ | ○ | ○ | ○ | ○ | △ | △ |
| 44 | | | 60 | □ | ○ | ○ | ○ | ○ | ○ | △ | △ |
| 45 | | | 80 | □ | ○ | ○ | ○ | ○ | ○ | △ | △ |
| 46 | | | 10 | □ | ○ | ○ | ○ | ○ | ○ | ○ | ○ |
| 47 | | | 20 | □ | ○ | ○ | ○ | ○ | ○ | ○ | ○ |
| 48 | 0.042 | 0.0110 | 40 | □ | ○ | ○ | ○ | ○ | ○ | ○ | ○ |
| 49 | | | 60 | □ | ○ | ○ | ○ | ○ | ○ | ○ | ○ |
| 50 | | | 80 | □ | □ | ○ | □ | ○ | □ | ○ | □ |
| 51 | | | 10 | □ | ○ | ○ | ○ | ○ | ○ | ○ | ○ |
| 52 | | | 20 | □ | ○ | ○ | ○ | ○ | ○ | ○ | ○ |
| 53 | 0.041 | 0.0182 | 40 | □ | ○ | ○ | ○ | ○ | ○ | ○ | ○ |
| 54 | | | 60 | □ | ○ | ○ | ○ | ○ | ○ | ○ | ○ |
| 55 | | | 80 | □ | □ | ○ | □ | ○ | □ | ○ | □ |
| 56 | | | 10 | × | × | △ | × | △ | × | △ | × |
| 57 | | | 20 | × | × | △ | × | △ | × | △ | × |
| 58 | 0.072 | 0.0025 | 40 | × | × | △ | × | △ | × | △ | × |
| 59 | | | 60 | × | × | △ | × | △ | × | △ | × |
| 60 | | | 80 | × | × | △ | × | △ | × | △ | × |

**0079620**

Alloy formation in the aluminum-plated layer was judged on the basis of microscopic observation. The results are described in the column "State of Substrate" in the table. The symbols in that column have the following meanings :

○ : Good recrystallized structure in both substrate and plated layer. No alloy formation.

□ : No alloy formation. Insufficient recrystallization in substrate.

△ : Substrate well recrystallized. Alloy formation in plated layer. Surface colored greyish black.

× : Substrate sheet not recrystallized. Plated layer totally alloyed. Surface colored greyish black.

(B) Properties of enamel layer (blister defect and adhesion).

Blister defect was checked by observation with a 10 power loupe.

Adhesion was determined in accordance with the drop impact deformation test by measuring the amount of the residual enamel layer when a test piece was placed between a die with a 25.5 mm diameter hole and a punch 25 mm in diameter and a 1 kg weight was dropped thereupon so as to form a deformation recess 3 mm in the maximum depth. The results are summarized in the column "Properties of Enamel" in the table. The symbols in the column have the following meanings :

○ : No blister defect and no scaling.

△ : No blister defect and 1 - 50 % scaling.

× : No blister defect and more than 50 % scaling.

□ : No scale-off but blister defect observed.

As shown in Table 1, no blister defect is observed in any of the samples prepared using the substrate sheet rolled with 10 - 70 % reduction and annealed. Blister defect is observed in the samples in which the substrate sheet rolled with more than 80 % reduction. This would be due to cracking in the plated layer which developed during the rolling. The samples in which the substrate sheet contained a suitable amount of N in accordance with this invention did not develop alloy formation even when firing was effected at a temperature higher than 500°C. They did not develop alloy formation during enamel-forming firing (550°C), either. Therefore, the adhesion of the resulting enamel layer was very good. From Table 1 it is noted that the higher the C content of the starting steel sheet is, the more inhibited the alloy formation is. (The alloy formation temperature is raised.)

The test results concerning the relation between the Si content of the plated aluminum layer and the workability thereof are shown in Table 2. The test was carried out by aluminum-plating 1.2 mm thick steel sheets (which contained 0.0015 % by weight C and 0.0115 % by weight N) using Al-Si plating baths with varied Si contents by the conventional process, and rolling down by 10 - 80 %. Evaluations in the table are based on microscopic observation. As shown in the table, when the Si content of the bath is low, cracking develops from the alloyed layer resulting in scaling of the plated layer even if the rolling reduction is low. This is because the alloyed layer formed during plating develops as stated above. On the other hand, when the Si content is too high, cracking occurs. This is because plate-like Si crystals develop in the plated layer. In order to prevent this, the Si content of the bath (and accordingly of the plated layer) must be limited within the range of 1 - 15 % by weight.

Table 2

| Sample No. | Si Content of Plated Layer (wt%) | Rolling Reduction [%] | State of Rolled Plated Layer |
|---|---|---|---|
| 1 | | 10 | Cracks in alloyed layer. Plated layer scaling off. |
| 2 | | 20 | " |
| 3 | 0.4 | 40 | " |
| 4 | | 60 | " |
| 5 | | 80 | " |
| 6 | | 10 | Alloyed layer not finely divided. |
| 7 | | 20 | Good |
| 8 | 1.9 | 40 | Good |
| 9 | | 60 | Good |
| 10 | | 80 | Large cracks in plated layer. |
| 11 | | 10 | Cracks in alloyed layer. Plated layer scaling off. |
| 12 | | 20 | Good |
| 13 | 8.3 | 40 | Good |
| 14 | | 60 | Good |
| 15 | | 80 | Large cracks in plated layer. |
| 16 | | 10 | Cracks in alloyed layer. Plated layer scaling off. |
| 17 | | 20 | Good |
| 18 | 14.2 | 40 | Good |
| 19 | | 60 | Good |
| 20 | | 80 | Large cracks in plated layer. |
| 21 | | 10 | Large cracks in plated layer. Local scaling off. |
| 22 | | 20 | " |
| 23 | 16.3 | 40 | " |
| 24 | | 60 | " |
| 25 | | 80 | " |

In this invention, the thickness of the base steel sheet and the amount of plated aluminum is not substantially limited, and reduction in rolling can be arbitrarily determined on the basis of the thickness of the plated steel sheet and the final substrate sheet within the range of 10 - 70 %. Further, when annealing is to be carried out at a temperature higher than the recrystallization temperature of the base steel sheet after rolling at a higher reduction rate in order to restore the workability of the base steel sheet, or when the firing is to be carried out at a higher temperature, a base sheet steel sheet containing a suitable amount of N may well be employed. Thus desired results can be obtained without alloy formation. It will be noted that a finish temper rolling may be carried out after the recrystallization annealing if necessary. It is also possible to repeat rolling and recrystallization in order to attain a desired thickness.

Now the invention will be described specifically by way of working examples.

Example 1

Base steel sheets No. 1 - 10 as shown in Table 3 were hot-dip aluminum-plated. Enameling was carried out on these sample substrates, as is with respect to No. 9 and 10, and after rolling and recrystallization with respect to No. 1 - 8. Working conditions and properties of the rolled and recrystallized substrate sheet as well as properties of the formed enamels are described below.

(I) Hot-dip aluminum plating.

Base steel sheets were passed through an Al bath containing 9 % Si in accordance with the Sendzimir process, and plated substrate sheets were obtained. The amount of plated Al was 30 $g/m^2$ per side for No. 1 - 8 and 40 $g/m^2$ for No. 9 and 10.

Table 3

| Sample No. | Steel Composition (wt%)* | | Thickness of Base Steel Sheet (mm) |
|---|---|---|---|
| | C | N | |
| 1 | 0.002 | 0.0057 | 1.2 |
| 2 | 0.003 | 0.0115 | " |
| 3 | 0.024 | 0.0061 | " |
| 4 | 0.030 | 0.0084 | " |
| 5 | 0.075 | 0.0092 | " |
| 6 | 0.004 | 0.0021 | " |
| 7 | 0.040 | 0.0032 | " |
| 8 | 0.083 | 0.0036 | " |
| 9 | 0.053 | 0.0025 | 0.6 |
| 10 | 0.053 | 0.0090 | 0.6 |

* The steel contains the following elements as inevitable impurities :

    Mn : 0.22 - 0.38 % by weight

    Si : tr.

    P  : 0.006 - 0.01 % by weight

    S  : 0.009 - 0.014 % by weight

(II)   Rolling and recrystallization annealing.

Substrate sheets were obtained by cold-rolling Samples No. 1 - 8 at a reduction of 50 % and annealed at 530°C for 10 hours for recrystallizing both the base sheet and the plated aluminum layer. The thickness of the base sheet was 0.6 mm and the amount of the plated aluminum was 40 g/m$^2$ per side. Samples No. 9 and 10 were hot-dip plated without rolling and annealing. The thickness was 0.6 mm.

(III)   Properties of substrate sheets for enameling.

The appearance, and structure of rolled and annealed base steel sheets and the workability of the aluminum-plated sheets are shown in Table 4. The structure of base steel

Table 4

| Sample No. | Appearance of Annealed Sheets | Recrystallization of Base Steel Sheets | Workability of Plated Layer | | Properties of Enamel Layer | | | Remarks |
| --- | --- | --- | --- | --- | --- | --- | --- | --- |
| | | | | | Blister Defect | | | |
| | | | Bending | Deep Drawing | Non-Worked Portion | Worked Portion | Adhesion | |
| 1 | Silver white | Good | ○ | ○ | ○ | ○ | ○ | Products This Invention |
| 2 | " | " | ○ | ○ | ○ | ○ | ○ | |
| 3 | " | " | ○ | ○ | ○ | ○ | ○ | |
| 4 | " | " | ○ | ○ | ○ | ○ | ○ | |
| 5 | " | " | ○ | ○ | ○ | ○ | ○ | |
| 6 | Greyish black | Good | × | .× | × | × | × | Comparative Samples |
| 7 | " | " | × | × | × | × | × | |
| 8 | " | " | × | × | × | × | × | |
| 9 | — | — | △ | △ | × | × | ○ | |
| 10 | — | — | △ | △ | × | × | ○ | |

sheets and the workability of plated sheets were measured as follows :

(a)  Structure of base steel sheets.

The structure of base steel sheets was judged on the basis of measured hardness and ferrite crystal configurations observed microscopically.

(b)  Workability of plated layer.

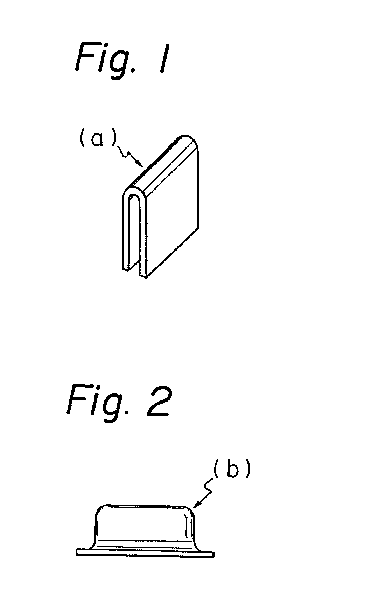

Test pieces of the plated sheets were subjected to close bending test based on JIS Z 2248 and the Erichsen deep drawing cup test by means of a deep drawing test machine manufactured by Erichsen & Co.  (punch diameter: 40 mm; punch shoulder radius of curvature: 1 mm; die diameter: 42 mm; die shoulder radius of curvature: 5 mm; blank diameter: 80 mm; and drawing depth: 20 mm).  The shapes of the bent test piece and the deep-drawn test piece are shown in the attached Fig. 1 and 2. The surface appearance and conditions of the plated layer at the deformed portion were observed with naked eye.  The symbols in the column "Workability of Plated Layer" have the following meanings :

O :  No cracking
△ :  Slight cracking
× :  Heavy cracking

(IV)  Enamel formation.

A slip of a commercially available enamel glaze for aluminum-plated steel sheets was sprayed upon the surface of defatted substrate sheets so as to form à 70 µm thick layer, and fired at 550°C for 7 minutes.

(V)  Evaluation of enamel properties.

Blister defect and adhesion of the formed enamel layer

**0079620**

were tested and measured as follows for each sample sheet.

(a)  Blister defect.

Those portions of the enamel surfaces of the enameled sheets not worked for testing and those of portions bent and deep-drawn were inspected by means of a universal projector and the existence of blister defect was checked.  The symbols in the column "Blister Defect" in the table have the following meanings :

  ○ :  No blister defect
  ✗ :  Blister defect observed

(b)  Adhesion.

Using flat test pieces, the amount of the enamel layer remaining when a test piece was subjected to the drop impact deformation test as mentioned above was determined (punch diameter: 25 mm, die diameter: 25.5 mm; drop weight: 1 kg and depth of maximum deformation: 3 mm).  The symbols in the column "Adhesion" in the table means as follows:

  ○ :  No scaling
  △ :  1 - 50 % scaling
  ✗ :  More than 50 % scaling

As noted in Table 4, Samples No. 1 - 5, which satisfy the requirements of this invention, are bright silver white (which means no alloy was formed) and are good in recrystallization of the base steel sheet and excellent in workability.  Also pinholes of the plated layer were entirely eliminated by rolling and annealing, and no cracking developed during working. Thus the enameled layer was free from blister defect and had good adhesion.

On the other hand, Samples No. 6 - 8 (wherein the N content of the base steel sheet was less than 0.004 % by weight) suffered alloy formation throughout the entire plated layer greyish black coloration), exhibited deterioration in the workability of the plated layer, developed cracking during working and exhibited blister defect in the enamel layer. Adhesion of the enamel layer was also poor.

Samples No. 9 containing less than 0.004 % N and No. 10 containing more than 0.004 % N, both neither rolled nor annealed were inferior in workability, developed minute crack during working, and exhibited blister defect in the finished enamel product. These undesirable properties attributable to the fact that the plated layer was of the cast structure. Even in the non-worked portion, blister defect developed because of the existence of pinholes.

Example 2

The same base steel sheet as Sample No. 5 of Example 1 was hot-dip plated with the same plating bath as in Example 1, and plated sheet was rolled down by 10 - 80 % and was heated at 530°C for 10 hours for recrystallization. Each sample was enameled in the same way as in Example 1.

Properties of the substrate sheets and the enameled products are summarized in Table 5. Methods of measurement and evaluation were the same as in Example 1.

As noted in Table 5, Samples No. 1 - 7, which are products of this invention, gave enameled products free from blister defect and with good adhesion, since their substrate sheets were satisfactory in structure (recrystallized) and they were provided with a plated layer having good workability. In contrast, Sample No. 8 gave enameled products inferior in the properties, although the properties of the plated layer were good. The rolling reduction was too high (80 %), and therefore minute cracks developed and blister defect was generated not only in the worked portion but also in the non-worked portion. This sample was far inferior to the products of this

Table 5

| Sample No. | Rolling Reduction (%) | Appearance of Re-crystallization Annealed Sheets | Recrystallization of Base Steel | Workability of Plated Layer | | Properties of Enamel Layer | | |
| | | | | | | Blister Defect | | |
| | | | | Bending | Deep Drawing | Non-Worked Portion | Worked Portion | Adhesion |
| 1 | 10 | Silver white | Good | ○ | ○ | ○ | ○ | ○ |
| 2 | 20 | " | " | ○ | ○ | ○ | ○ | ○ |
| 3 | 30 | " | " | ○ | ○ | ○ | ○ | ○ |
| 4 | 40 | " | " | ○ | ○ | ○ | ○ | ○ |
| 5 | 50 | " | " | ○ | ○ | ○ | ○ | ○ |
| 6 | 60 | " | " | ○ | ○ | ○ | ○ | ○ |
| 7 | 70 | " | " | ○ | ○ | ○ | ○ | ○ |
| 8 | 80 | " | " | △ | △ | × | × | ○ |

invention in these respects.

Example 3

Base steel sheets, the compositions of which are shown in Table 6, were hot-dip plated with the same plating bath as in Example 1, and the plated sheets were rolled down by 10 - 80 % and were heated at 300°C for 5 hours for recrystallization. Each sample was enameled in the same way as in Example 1.

Properties of the substrate sheets and the enameled products are summarized in Table 6. Methods of measurement and evaluation were the same as in Example 1.

As noted in Table 6, Samples No. 1 and 2, which are products of this invention, had a plated layer with a good rolled-and-recrystallized structure because of proper rolling and annealing, and therefore, the resulting enamel layer was free from blister defect and adhesion of the enamel layer was excellent because no alloy formation occurred during firing. In contrast, Samples No. 3 - 5 were inferior to the products of this invention in that the enamel layer had blister defect although the adhesion thereof was good. The blister defect which developed in Sample No. 3 was caused by cracks of the plated layer due to excessive rolling, while the blister defect which developed in Sample No. 4 and 5 (not rolled) was caused by pinholes which remained in the plated layer.

Merits of the Invention

As has been described in the above, this invention provides enameled products the enamel layer of which is free from blister defect and is excellent in adhesion to the substrate. In this invention, higher firing temperatures can be employed without sacrificing adhesion of the enamel layer, and therefore enamel glaze can be selected from a wider range of materials, and the properties of the enamel layer are further enhanced.

Table 6

| Sample No. | Base Steel Composition (wt%) | | Reduction in Rolling After Plating (%) | Recrystallization of Plated Layer | Properties of Enamel Layer | | Remarks |
|---|---|---|---|---|---|---|---|
| | C | N | | | Blister Defect | Adhesion | |
| 1 | 0.004 | 0.0041 | 20 | Good | ○ | ○ | Products of This Invention |
| 2 | 0.040 | 0.0052 | 50 | Good | ○ | ○ | |
| 3 | 0.083 | 0.0046 | 80 | Good | × | ○ | Excessively Rolled |
| 4 | 0.053 | 0.0025 | 0 | — | × | ○ | Comparative Samples |
| 5 | 0.053 | 0.0090 | 0 | — | × | ○ | |

Note: Conditions of Recrystallization Annealing : 300°C x 5 hrs.

Although the invention has been described in detail with respect to hot-dip aluminum-plated steel sheets, it will be understood that the process of this invention is also applicable to aluminum-coated steel sheets prepared by cladding, powder coating method, vacuum vapor deposition process, etc.

## Claims

1. An aluminum-coated steel sheet for enameling comprising a base steel sheet which contains 0.004 - 0.02 % by weight of nitrogen and an aluminum coating layer having a rolled-and-recrystallized structure.

2. The aluminum-coated steel sheet for enameling as claimed in Claim 1, wherein the aluminum coating contains 1 - 15 % by weight of silicon.

3. An aluminum-coated steel sheet for enameling comprising a base steel sheet which contains 0.004 - 0.02 % by weight of nitrogen and has a rolled-and-recrystallized structure and an aluminum coating layer having a rolled-and-recrystallized structure.

4. The aluminum-coated steel sheet for enameling as claimed in Claim 3, wherein the aluminum coating contains 1 - 15 % by weight of silicon.

*Fig. 1*

(a)

*Fig. 2*

(b)